Europäisches Patentamt

(19) European Patent Office

Office européen des brevets

(11) Numéro de publication : **0 317 436 B1**

(12) **FASCICULE DE BREVET EUROPEEN**

(45) Date de publication du fascicule du brevet :
29.05.91 Bulletin 91/22

(51) Int. Cl.⁵ : **C09K 3/32**

(21) Numéro de dépôt : **88402893.7**

(22) Date de dépôt : **17.11.88**

(54) **Procédé pour resorber les fuites de liquides.**

(30) Priorité : **18.11.87 FR 8715936**

(43) Date de publication de la demande :
**24.05.89 Bulletin 89/21**

(45) Mention de la délivrance du brevet :
**29.05.91 Bulletin 91/22**

(84) Etats contractants désignés :
**AT BE CH DE ES FR GB IT LI NL SE**

(56) Documents cités :
**EP-A- 0 242 683**
**WO-A-84/04706**

(73) Titulaire : **SOLETANCHE Société Anonyme
dite:
6 rue de Watford
F-92005 Nanterre (FR)**

(72) Inventeur : **Gouvenot, Daniel
1, Allée Gambetta
F-92110 Clichy (FR)**
Inventeur : **Bissery, Paul
22, rue Pont Tarault
F-78610 Le Perray-en-Yvelines (FR)**

(74) Mandataire : **Stalla-Bourdillon, Bernard et al
CABINET NONY & CIE 29, rue Cambacérès
F-75008 Paris (FR)**

## Description

La présente invention a pour objet un procédé pour résorber les fuites de liquides notamment toxiques ou radioactifs.

Dans divers types d'installation notamment dans les secteurs de la chimie industrielle et de l'industrie nucléaire, des fuites accidentelles de liquides, aqueux ou non, présentant des caractères de toxicité ou de radioactivité, peuvent intervenir. Afin de circonscrire la contamination, il convient d'agir rapidement en vue d'arrêter dès que possible les fuites et limiter l'étalement des liquides pour réduire les zones contaminées. En effet plus on agit rapidement, plus il est alors possible de limiter la contamination non seulement horizontalement mais également verticalement par pénétration gravitaire dans le sol.

A l'heure actuelle les méthodes utilisées pour lutter contre les fuites consistent à appliquer certains produits fonctionnant par absorption capillaire comme par exemple du sable ou de la sciure.

Ces produits s'ils permettent d'absorber les liquides, sont toutefois peu commodes car après absorption il est difficile de les éliminer et peuvent provoquer par ailleurs des risques de contamination par dispersion dûe aux intempéries notamment par la pluie ou le vent.

La présente invention fournit un procédé permettant de lutter contre les fuites accidentelles de liquides qu'il soit aqueux ou non sans que l'on rencontre les inconvénients des méthodes utilisées jusqu'à ce jour.

Le procédé selon l'invention a par ailleurs l'avantage de pouvoir être mis en pratique de façon particulièrement simple et efficace.

Le procédé selon l'invention pour résorber les fuites de liquides consiste à répandre sur la surface du liquide des granulés d'au moins un composé minéral poreux ayant un diamètre moyen d'environ 1 à 10 mm, à laisser absorber le liquide et à projeter sur les granulés une composition à base d'une résine durcissable par action chimique en vue de former une masse rigide à semi-rigide.

Le composé minéral poreux est un silicate d'aluminium tel que de l'argile de type montmorillonite ou de type kaolinite ou un aluminosilicate alcalin ou alcalino-terreux tel que par exemple les zéolithes.

Comme ceci est indiqué ci-dessus, les granulés sont d'un diamètre relativement important, celui-ci devant être compris entre environ 1 à 10 mm.

En plus de leurs propriétés d'absorption, l'argile et plus particulièrement les zéolithes ont des propriétés d'adsorption physico-chimiques qui permettent de fixer beaucoup plus efficacement les liquides.

Les argiles de type montmorillonite ont en outre des propriétés d'échanges ioniques qui permettent de fixer par des liaisons physiques résistantes des ions métalliques tels que le mercure, le plomb, le cadmium, le strontium ou encore le césium qui sont particulièrement toxiques.

Les granulés utilisés dans le procédé selon l'invention ont donc en plus de leurs caractéristiques d'absorption, des propriétés de rétention et d'échanges ioniques d'un grand intérêt vis-à-vis des liquides toxiques ou radioactifs.

Selon une forme particulière de réalisation de l'invention, on utilise des granulés d'argile de type montmorillonite associés à de la poudre fine de zéolithes, cette dernière étant présente en une proportion de 1 à 100% en poids par rapport à l'argile et de préférence d'environ 10% en poids. La poudre de zéolithes a la propriété de tapisser les granulés d'argile d'une couche mince, ce qui permet d'améliorer l'absorption et l'adsorption des liquides.

La vitesse d'absorption des granulés est généralement rapide mais dépend de la nature du liquide.

Après absorption, les granulés ont tendance à s'agglomérer les uns aux autres en vue de former une masse compacte et cohérente, ceci étant particulièrement notable lorsque les liquides sont de nature aqueuse.

Les granulés du composé minéral poreux peuvent être répandus sur la surface du liquide de différentes manières, par exemple par saupoudrage, par gravitation ou encore par pulvérisation à l'aide d'un appareil à air comprimé.

Après absorption du liquide par les granulés on projette sur ceux-ci une composition de résine polymérique durcissable par action chimique en vue de former, en quelques minutes, une masse rigide ou semi-rigide recouvrant les granulés d'une enveloppe imperméable.

La masse obtenue peut alors être facilement éliminée par pelletage manuel ou mécanique et être stockée éventuellement plusieurs semaines sans précaution particulière avant destruction ou retraitement.

Comme résine durcissable, on peut par exemple utiliser des polyuréthanes à un composant. Il s'agit de système réticulable par l'humidité, la résine étant un pré-polymère comportant des fonctions isocyanates terminales.

Après réticulation par l'humidité, le polymère obtenu est du type polyuréthane-polyurée.

On peut également utiliser selon l'invention une résine du type polyuréthane à deux composants, le premier composant étant un polyol et le deuxième composant un durcisseur du type isocyanate tel que le toluylène diisocyanate ou le diphénylméthane diisocyanate.

Comme système à deux composants, on peut en particulier utiliser le produit fabriqué sous la dénomination de "FROTHPAK" par la Société CARBOCHIM.

De préférence, on utilise un système à deux composants dans la mesure où l'on obtient un durcissement particulièrement rapide de l'ordre de 1 à 2 minutes après la projection.

La présente invention a également pour objet un dispositif pour la mise en oeuvre du procédé selon l'invention.

Ce dispositif est composé de deux compartiments, l'un contenant des granulés d'un composé minéral poreux ayant un diamètre moyen d'environ 1 à 10 mm et l'autre contenant une résine durcissable par action chimique à un ou deux composants, ces compartiments étant munis de moyens permettant de projeter à distance d'une part les granulés et d'autre part la résine durcissable.

Selon une forme préférée de réalisation, les deux compartiments, de préférence cylindrique, sont disposés sur un chariot mobile du type de ceux utilisés pour les extincteurs de grande capacité.

**Revendications**

1. Procédé pour résorber les fuites de liquides, caractérisé par le fait qu'il consiste à répandre sur la surface du liquide des granulés d'au moins un composé minéral poreux ayant un diamètre de 1 à 10 mm, à laisser absorber le liquide et à projeter sur les granulés une composition à base d'une résine durcissable par action chimique en vue de former une masse rigide à semi-rigide.

2. Procédé selon la revendication 1, caractérisé par le fait que les granulés sont des granulés d'argile du type montmorillonite ou du type kaolinite.

3. Procédé selon la revendication 1 ou 2, caractérisé par le fait que les granulés sont des granulés d'argile de type montmorillonite associés à de la poudre de zéolithes en une proportion de 1 à 100% en poids par rapport à l'argile.

4. Procédé selon la revendication 1, caractérisé par le fait que les granulés sont des granulés de zéolithes.

5. Procédé selon la revendication 1, caractérisé par le fait que la résine durcissable est une résine polyuréthane à un composant réticulable par l'humidité.

6. Procédé selon la revendication 1, caractérisé par le fait que la résine durcissable est du type polyuréthane à deux composants.

7. Procédé selon la revendication 6, caractérisé par le fait que le premier composant est un polyol et le deuxième composant un durcisseur du type isocyanate.

8. Dispositif pour la mise en oeuvre du procédé selon l'une quelconque des revendications 1 à 7, caractérisé par le fait qu'il est constitué de deux compartiments, l'un contenant des granulés d'un composé minéral poreux ayant un diamètre moyen d'environ 1 à 10 mm et l'autre contenant une résine durcissable par action chimique à un ou deux composants, lesdits compartiments étant munis de moyens permettant de projeter à distance d'une part les granulés et d'autre part la résine durcissable.

9. Dispositif selon la revendication 8, caractérisé par le fait que les compartiments sont disposés sur un chariot mobile.

**Ansprüche**

1. Verfahren zum Resorbieren von Flüssigkeitsleckagen, dadurch gekennzeichnet, daß es darin besteht, daß man auf der Oberfläche der Flüssigkeit ein Granulat aus mindestens einer mineralischen, porösen Verbindung mit einem Korndurchmesser von 1 bis 10 mm verteilt, daß man die Flüssigkeit absorbieren läßt und daß man eine Zusammensetzung auf der Grundlage eines durch chemische Wirkung härtbaren Harzes auf das Granulat aufspritzt, um eine starre bis halbstarre Masse zu bilden.

2. Verfahren nach Anspruch 1, dadurch gekennzeichnet, daß das Granulat ein Granulat aus Montmorillonit- oder Kaolinit-Tonerde ist.

3. Verfahren nach Anspruch 1 oder 2, dadurch gekennzeichnet, daß das Granulat ein Granulat aus Montmorillonit-Tonerde ist, das mit Zeolith-Pulver mit einem Anteil von 1 bis 100 Gew.-% verbunden ist, bezogen auf die Tonerde.

4. Verfahren nach Anspruch 1, dadurch gekennzeichnet, daß das Granulat ein Zeolith-Granulat ist.

5. Verfahren nach Anspruch 1, dadurch gekennzeichnet, daß das härtbare Harz ein Polyurethanharz mit einem durch Feuchtigkeit vernetzbaren Bestandteil ist.

6. Verfahren nach Anspruch 1, dadurch gekennzeichnet, daß das härtbare Harz ein Zwei-Komponenten-Polyurethanharz ist.

7. Verfahren nach Anspruch 6, dadurch gekennzeichnet, daß die erste Komponente ein Polyol und die zweite Komponente ein Isocyanathärter ist.

8. Vorrichtung zur Durchführung des Verfahrens nach irgendeinem der Ansprüche 1 bis 7, dadurch gekennzeichnet, daß sie von zwei Abteilungen gebildet ist, von denen die eine das Granulat aus einer mineralischen, porösen Verbindung mit einem mittleren Korndurchmesser von etwa 1 bis 10 mm und die andere das durch chemische Wirkung härtbare Ein- oder Zwel-Komponenten-Harz enthält, und daß die Abteilungen mit Mitteln ausgestattet sind, die es gestatten, einerseits das Granulat und andererseits das härtbare Harz über einen Abstand hinweg aufzuspritzen.

9. Vorrichtung nach Anspruch 8, dadurch gekennzeichnet, daß die Abteilungen auf einem fahrbaren Wagen angeordnet sind.

**Claims**

1. Process for absorbing leakages of liquids, characterized in that it consists in spreading on the surface of the liquid granules of at least one porous inorganic compound which has a diameter of 1 to 10 mm, allowing the liquid to be absorbed and spraying onto the granules a composition based on a resin capable of being cured by chemical action with a view to forming a rigid to semirigid mass.

2. Process according to Claim 1, characterized in that the granules are granules of clay of the montmorillonite type or of the kaolinite type.

3. Process according to Claim 1 or 2, characterized in that the granules are granules of clay of the montmorillonite type in combination with powdered zeolite in a proportion of 1 to 100% by weight relative to the clay.

4. Process according to Claim 1, characterized in that the granules are granules of zeolites.

5. Process according to Claim 1, characterized in that the curable resin is a polyurethane resin containing a component which can be crosslinked by moisture.

6. Process according to Claim 1, characterized in that the curable resin is of the two-component polyurethane type.

7. Process according to Claim 6, characterized in that the first component is a polyol and the second component a hardener of the isocyanate type.

8. Device for making use of the process according to any one of Claims 1 to 7, characterized in that it consists of two compartments, one containing granules of a porous inorganic compound which has a mean diameter of approximately 1 to 10 mm, and the other containing a resin capable of being cured by a chemical action, containing one or two components, the said compartments being provided with means allowing, on the one hand, the granules and, on the other hand, the curable resin to be projected at a distance.

9. Device according to Claim 8, characterized in that the compartments are arranged on a movable trolley.